# EUROPEAN PATENT SPECIFICATION

(11) **EP 1 825 080 B1**
(45) Date of publication and mention of the grant of the patent: **09.03.2016**
(21) Application number: 05823469.1
(22) Date of filing: 13.12.2005
(51) Int. Cl.: E04F 13/00, F16B 5/06, E04B 2/74, E04G 21/24, G09F 15/00

(54) **TEXTILE PANEL AND RELATIVE PRODUCTION METHOD**
TEXTILABDECKUNG UND ZUGEHÖRIGES HERSTELLUNGSVERFAHREN
PANNEAU TEXTILE ET PROCEDE DE PRODUCTION DE CELUI-CI

(30) Priority: 14.12.2004 IT UD20040230
(43) Date of publication of application: 29.08.2007
(73) Proprietor: Tensoforma Trading S.r.l., 24060 Entratico (IT)
(72) Inventor: BERTINO, Stefano, I-24129 Bergamo (IT)
(74) Representative: Petraz, Gilberto Luigi
(86) International application number: PCT/EP2005/056727
(87) International publication number: WO 2006/063991

(56) References cited:
- WO-A-01/31618
- BE-A3- 1 003 554
- CA-A1- 2 403 170
- DE-U1- 20 217 618
- US-A1- 2002 056 215
- US-A1- 2003 150 147

## Description

### FIELD OF THE INVENTION

The present invention concerns a textile panel, of the type used to line or cover buildings, or as a dividing element and/or an advertising means, and the relative production method.

Within the framework of the present invention the term textile panel generically denotes a panel comprising a sheet, made of fabric, plastic material or suchlike, supported by a frame.

### BACKGROUND OF THE INVENTION

Textile panels are known, used for various purposes, both in association with buildings, for example for covering them, or for masking scaffolding set up for construction and/or maintenance work, and also as independent structures for dividing spaces or with an advertising purposes.

Such textile panels comprise a sheet associated, in its tensed condition so as to maintain its surface without wrinkles and undulations, with a relative supporting frame which normally develops over the entire perimeter of the sheet.

The sheet can be made of various materials, for example, natural or synthetic fabric, or of plastic material, and can be both of the uniform type or perforated, according to the final use of the textile panel.

To produce textile panels of a known type, firstly it is provided to assemble the frame and then put the sheet under tension, constraining it to the frame by means of helical springs, elastic hooks, cables or suchlike.

Textile panels thus produced can imply difficulties, however, in the tensioning step of the sheet, or can entail, with time, a loosening of the sheet.

DE-U-202 17 618 discloses a panel wherein a flexible sheet, such as a fabric, or similar material, is kept in tension by means a quadrilateral frame composed by four profiles, which can be inserted and locked in four corresponding corner elements. The flexible sheet is shaped so as to have an enlargement, or Keder, on each edge which is able to be inserted into corresponding longitudinal hollow seating , of the corresponding profile. Each corner element is formed by two semi-shells, which define internal seats for lodging the profiles. A locking bolt is provided for locking the two semi-shells therebetween and the profiles into the seats. Therefore, in this known panel, the flexible sheet and the Keder form a single and integral element made of the same material.

US-A-2002/0056215 discloses an assembly for mounting a flexible display sheet to a structure, for example of a vehicle. The structure comprises two mounting brackets and two corresponding adjustment brackets. Each adjustment bracket has a first end and an opposing second end, the display sheet being secured to the first end of each adjustment bracket. A brace is rigidly attached to the structure and has an opening extending therethrough. A coupling pin has a first end and an opposing second end, the first end of the coupling pin being mounted to the second end of the adjustment bracket, the second end (104) of the coupling pin extending through the opening on the brace. An advancing nut is threadedly mounted on the second end of the coupling pin, the advancing nut being configured to bias against the brace so as to advance the coupling pin through the opening on the brace as the advancing nut is threaded onto the coupling pin. The flexible display sheet is connected to the mounting brackets and to the adjustment brackets by means of a retention line secured to the display portion of the sheet by a sleeve, which is substantially rigid, like the Keder material.

It is also known by the BE-A-1003554 a panel which comprises a rigid frame having a rectangular form and on which a flexible screen, in particular for the projection of fixed or animated images, is tensioned. The frame consists of four rigid profiles connected one to the other by four joining corner elements. The flexible screen along its periphery is provided with a fastening element to be fastened to the frame. The fastening element in one embodiment is constituted by a ribbon of "VELCRO", while in another embodiment it is constituted by a longitudinal projection having a hook form which can be introduced and maintained in a corresponding longitudinal groove of each profile. This panel discloses all the features of the preamble of claim 1.

Purpose of the present invention is to produce a textile panel with a simple but effective method, which allows to maintain the sheet tensioned in an optimum manner over time.

Another purpose of the invention is to achieve a textile panel which is structurally simple and economic from the constructional point of view, but also versatile in use and aesthetically pleasing.

The Applicant has devised and embodied the present invention to overcome the shortcomings of the state of the art in order to obtain these purposes and other advantages.

### SUMMARY OF THE INVENTION

The present .invention is set forth and characterized essentially in the main claims, while the dependent claims describe other innovative characteristics of the invention.

The textile panel according to the invention comprises a sheet associated by means of tensioning elements with a frame defined by at least two profiles, coupled together; the coupling of the profiles of the frame is achieved by means of connection elements able to selectively allow the reciprocal distancing thereof, in order to tension the sheet, and clamp it in the distanced position, so as to maintain the sheet under tension.

Advantageously, the frame has a polygonal conformation and is defined by a number of profiles equivalent to the number of its sides, each of which is associated with a tensioning element of mating length.

Each tensioning element advantageously comprises a band made of elastic material, such as for example rubber or an elastomer, such as silicon or suchlike.

In a preferential form of embodiment, each band comprises, for the whole of its length, at least a substantially flat portion, in correspondence with which the edge of the sheet is able to be attached by means of sewing, and a terminal enlargement by means of which the tensioning element is able to be constrained to the relative profile.

Each of the profiles of the frame has longitudinally at least a hollow seating inside which the terminal enlargement of the tensioning element is able to be inserted, and remain there due to interference.

Moreover, each profile, on at least one side, has a housing seating for clamping means able, in cooperation with the connection elements, to clamp the profiles in their distanced position for tensioning the sheet.

Advantageously, each of the profiles comprises two housing seatings consisting of respective longitudinal grooves and the clamping means comprises at least a platelet, slidably inserted inside each groove, and one or more screws, able to screw into threaded holes of said platelet, in order to determine the clamping through interference of a relative profile between the platelet and the connection elements.

In one embodiment of the invention, the connection elements comprise at least a bracket defining two relative segments, provided with respective through holes for the screws, each able to cooperate with a relative profile in correspondence with the sides on which the grooves are made.

According to a variant, the connection means comprises two attachment elements able to be inserted slidably and then attached inside respective profiles in order to determine the clamping of the latter in the distanced position.

The method to produce the textile panel according to the invention comprises at least the following steps:
- attaching the tensioning elements along the perimeter of the sheet;
- constraining the tensioning elements to the profiles of the frame;
- connecting the profiles to each other, by means of the connection means, so as to selectively allow the reciprocal distancing thereof;
- thrusting the profiles outwardly in order to determine the reciprocal distancing thereof and consequent tensioning of the sheet;
- clamping the profiles in the reciprocally distanced position in order to maintain the sheet under tension by means of the clamping means.

According to another characteristic feature of the present invention, the outward thrust is imparted to the profiles by means of a device provided with at least a fluid-dynamic actuator and able to exert this thrust simultaneously in a plurality of directions, so as to affect all the profiles.

Advantageously, in the presence of a polygonal frame, wherein the connection means have at least two segments cooperating with two adjacent profiles, the thrust is exerted by the device onto said connection means, which transmits it to the profiles.

In a preferential form of embodiment, the textile panel according to the invention comprises, for each of the profiles of the frame, a mating covering element able to cover and protect the tensioning element.

Advantageously, the covering element has at least a coupling element able to be constrained with a mating coupling element made on the relative profile, so as to be able to be associated under pressure with the latter at the end of the method to produce the textile panel.

In a possible application, the textile panel according to the invention comprises one or more complementary profiles, for example arched in shape, associated with the frame and protruding therefrom, able to confer a desired conformation or rounded shape, to the sheet.

### BRIEF DESCRIPTION OF THE DRAWINGS

These and other characteristics of the present invention-will become apparent from the following description of a preferential form of embodiment, given as a non-restrictive example with reference to the attached drawings wherein:
- - fig. 1: is a three-dimensional view of a textile panel according to the present invention;
- - fig. 2: is a partially sectioned three-dimensional view of a detail of the textile panel according to the present invention;
- - fig. 3: shows the cross section of a profile of the frame of the textile panel in fig. 1;
- - fig. 4: is a plane view of the textile panel in fig. 1 during the production step;
- - fig. 5: is a three-dimensional view of a detail of the frame of the textile panel in fig. 1;
- - fig. 6: shows a section of another detail of the frame of the textile panel in fig. 1;
- - fig. 7: is a three-dimensional view of a connection element of the frame of the textile panel in fig. 1;
- - fig. 8: shows the application of a textile panel according to the present invention in order to achieve a cover;
- - fig. 9: is an exploded three-dimensional view of a variant of the connection element of the frame of the textile panel according to the invention.

### DETAILED DESCRIPTION OF A PREFERENTIAL FORM OF EMBODIMENT

With reference to the attached drawings, the number 10 denotes generally a textile panel according to the present invention, in this case with a quadrilateral conformation.

The textile panel 10 essentially comprises a frame 11, a sheet 12 and four elastomeric bands 13 which, as will be clearer hereafter, are able to constrain the sheet 12 in its tensioned condition to the frame 11.

In this case, the frame 11 consists of four profiles 14 of a tubular type, advantageously made of anodized aluminum, associated in twos orthogonal with respect to each other by means of four connection brackets 15, 115.

The profiles 14 have a substantially square section and therefore define in sequence a first side 14a, a second side 14b, a third side 14c and a fourth side 14d.

Each profile 14 has over its entire length: an edge 16 between the first side 14a and the fourth side 14d, a rounded protrusion 17 between the first side 14a and the second side 14b, and two grooves 18 and 19, respectively along the third side 14c and the fourth side 14d.

The edge 16 is protruding with respect to the first side 14a and slightly recessed with respect to the fourth side 14d, defining with the latter a recess 28; along the edge 16 there is a hollow seating 20, with a substantially circular section and open towards the rounded protrusion 17, and an indentation 21 facing outwards.

A covering L-shaped bar 30 is able to be applied on each profile 14, advantageously under pressure and extending substantially from the edge 16 to the rounded protrusion 17.

To be more exact, the covering L-shaped bar 30 has one side able to be disposed in correspondence with the recess 28, and a tooth 29 able to be inserted, and clamped through interference, inside the indentation 11.

The grooves 18 and 19 have a substantially trapezoid section, with the smaller base facing inwards, and have an aperture facing outwards which is narrower than the larger base.

Inside each of the grooves 18 and 19 a relative platelet 25 is able to be inserted longitudinally, provided with a pair of threaded holes 26 for corresponding screws 27.

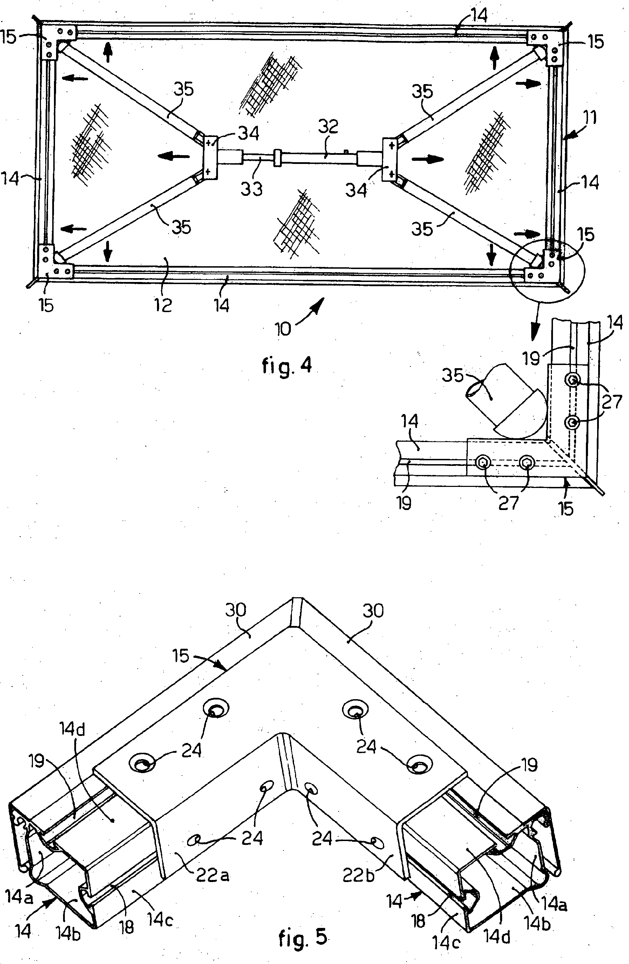

In the solution shown in figs. 4-7, the connection brackets 15 have a main body 22, with an L-shaped section, which develops in two segments 22a and 22b angled by 90° with respect to each other, and a baffle plate 23 disposed in a corner position between said two segments 22a and 22b.

Each of the two segments 22a and 22b has two pairs of through holes 24, made aligned on respective sides of the L-shaped section, and able to be aligned with the threaded holes 26 of a relative platelet 25.

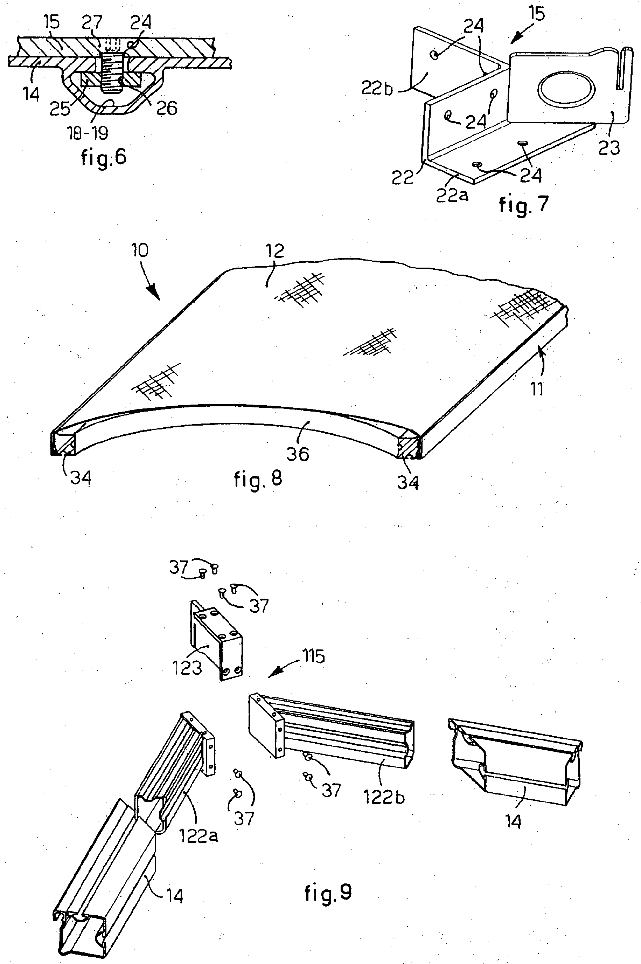

Each connection bracket 15 is able to be coupled in a corner position between two profiles 14, in such a manner that each segment 22a and 22b rests on the third side 14c and on the fourth side 14d of a relative profile 14, aligning the through holes 24 with the threaded holes 26 (figs. 5 and 6).

The elastomeric bands 13, for the whole of their length, have a flat portion 13a and a terminal enlargement 13b, circular in section, able to be inserted into the hollow seating 20.

Each elastomeric band 13 is of a length substantially equivalent to, or slightly less than, the length of a respective side of the sheet 12.

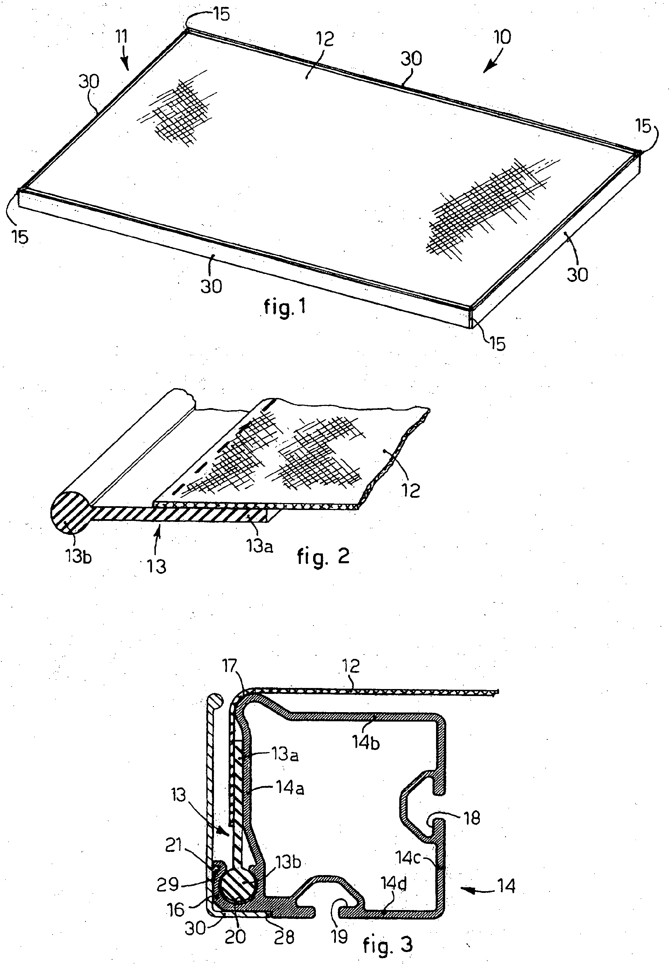

Each side of the sheet 12 partly overlaps the flat portion 13a of the relative elastomeric band 13, and is attached thereto advantageously by sewing (figs. 2 and 3).

According to a variant, the sheet 12 can be attached to the elastomeric bands 13 by means of nailing, seaming, welding, gluing or other suitable method.

In order to make the textile panel 10 according to the invention, it is provided to use a thrust device 31, of the type shown in fig. 4.

The thrust device 31 essentially comprises a hydraulic jack 32, with the ends of which respective plates 34 are associated.

On every plate 34 two rods 35 are pivoted, able to abut on the connection brackets 15, as will be explained hereafter.

In this case, the hydraulic jack 32 is of the simple-effect type and is provided with only one stem 33; according to a variant, a double-effect jack may be used, provided with two opposite stems 33.

The method to produce the textile panel 10 is as follows.

Firstly, the sheet is sewn in correspondence with each side to the flat portion 13a of the elastomeric bands 13.

Each elastomeric band 13 is then associated with the relative profile 14 by inserting its terminal enlargement 13b into the hollow seating 20 of the edge 16 of the profile 14.

To be more exact, the elastomeric band 13 is threaded in from one end of the hollow seating 20, so as to remain constrained inside the latter with the terminal enlargement 13b.

In this condition, the flat portion 13a of the elastomeric band 13 rests on the first side 14a of the profile 14, while the sheet 12 rests on the rounded protrusion 17 (fig. 3).

The four profiles 14, with the relative platelets 25 inside the grooves 18 and 19, are then disposed at 90° with respect to each other, according to the quadrilateral conformation that the textile panel 10 has to assume.

Between the four profiles 14 the connection brackets 15 are then disposed, so as to make the segments 22a and 22b of each of them rest on the third side 14c and on the fourth side 14d of two adjacent profiles 14, with the through holes 24 disposed along the grooves 18 and 19.

In this step, the platelets 25 are positioned so as to align the threaded holes 26 with the through holes 24 of the connection brackets 15; then the screws 27 are screwed only partly into said threaded holes 26, so as to allow the platelets to slide in any case inside the grooves 18 and 19 even though they are kept constrained to the connection brackets 15.

Subsequently, the thrust device 31 is positioned between the four profiles 14, disposing each one of the four rods 35 with the end abutting on a relative connection bracket 15.

Then the hydraulic jack 32 is driven which, through the rods 35, determines the simultaneous thrust of the four connection brackets 15, and hence of the four profiles 14 and the relative elastomeric bands 13, towards the outside, thus taking the sheet 12 under tension.

In this condition the screws 27 are tightened, so as to clamp the profiles 14 to the connection brackets 15 by means of the platelets 25 and hence substantially the profiles 14 to each other.

The jack 32 is then de-activated, making the stem 33 return so as to unclamp the rods 35 and allow the removal of the thrust device 31.

The textile panel 10 thus made is completed by applying to each profile 14 a relative covering L-shaped bar 30, made to abut on the baffle plate 23 of the connection bracket 15.

The function of the covering L-shaped bars 30 is to cover the elastomeric bands 13 so as to protect them from possible mechanical stresses and/or atmospheric agents, which could lead to a loosening of the sheet 12; at the same time they confer a more pleasing aesthetic appearance to the textile panel 10.

The textile panel 10 according to the present invention is therefore suitable to be used in a plurality of applications, both as a temporary covering element and also as a permanent finishing, for example for the facades of buildings.

The sheet 12 of the textile panel 10 can be made of any material able to absorb loads acting from outside, temporarily deforming in order then to reassume the original pre-tensed position.

The use of a sheet 12 of the impermeable type and with high resistance to stresses, hence able to resist against the wind and the weight of snow, also allows to use the textile panels according to the invention in order to make determinate structures for buildings.

Fig. 8, for example, schematically shows a textile panel 10 in which, inside the frame 11, a plurality of arched profiles 36 are disposed, by means of which a desired roundness is conferred on the sheet 12, so as to render the textile panel 10 particularly suitable for use as the roofs of buildings.

Fig. 9 shows a connection bracket 115 made in three parts: two attachment elements 122a and 122b able to be inserted inside respective profiles 14 of the frame 11, and an association element 123 able to allow the join of two attachment elements 122a and 122b using screws 37.

In this solution, the attachment elements 122a and 122b substantially have the function of the two segments 22a and 22b of the bracket 15, and are attached, in any suitable manner, to the profiles 14 in order to clamp them in the distanced position and confer on them a greater rigidity which reduces the possibility of torsion or rotation.

The use of the connection bracket 115 is particularly indicated in applications where it is necessary to obtain an inner or rear face of the textile panel 10 substantially without any parts protruding from the frame 11.

It is clear, however, that modifications and/or additions of parts and/or steps may be made to the textile panel 10 and relative production method as described heretofore, without departing from the field and scope of the present invention.

For example, the textile panel 10 can have a different shape, other than quadrangular, for example triangular, pentagonal, hexagonal, circular, using profiles 14 and connection brackets 15 of suitable conformation.

Or the elastomeric bands 13 could have a different section from that shown here.

Furthermore, the tensioning of the sheet 12 could be achieved with a device of any kind, preferably suitable to generate a thrust simultaneously on all the profiles 14 that make up the frame 11.

## Claims

1. A textile panel to line or cover buildings, or to form dividing element and/or advertising means, comprising at least a sheet (12) made of fabric or plastic material associated with a frame (11) by means of tensioning means (13), wherein said frame (11) has a polygonal conformation and is defined by a number of profiles (14) equivalent to the number of sides of said frame (11), wherein each of said profiles (14) has longitudinally at least a hollow seating (20), wherein said profiles (14) are connected to each other by means of connection means (15, 115) able to selectively allow both the reciprocal distancing thereof, to put said sheet (12) under tension, and the clamping thereof in a distanced position to maintain the tensioning of said sheet (12), and wherein each one of said profiles (14) has in sequence a first side (14a) defining the external perimeter of said frame (11), a second side (14b), a third side (14c) and a fourth side (14d), and has over its entire length an edge (16) between said first side (14a) and said fourth side (14d), wherein an external rounded protrusion (17) is provided between said first side (14a) and said second side (14b), and at least one housing seating (18, 19) is provided along said third side (14c) or said fourth side (14d) for housing clamping means (25, 27) able, in cooperation with said connection means (15, 115), to clamp said profiles (14) in said distanced position, wherein said sheet (12) is tensioned between the external rounded protrusion (17) of two opposite profiles (14) and has its perimetric edges folded around the respective external rounded protrusion (17) and parallel to the corresponding first side (14a) of each profile (14), wherein said tensioning means (13) is disposed parallel to said first side (14a) and comprises a plurality of bands (13) each made of an elastomer and wherein each of said bands (13) has a length mating with the length of the relative profile (14) and comprises, for the whole of its length, at least a flat portion (13a), in correspondence with which the edge of said sheet (12) is attached, and a terminal enlargement (13b) by means of which said band (13) is able to be inserted in said hollow seating (20) of the relative profile (14) to remain in said hollow seating (20) retained by interference and to be constrained to the relative profile (14), **characterized in that** said hollow seating (20) is provided on said edge (16): between said first side (14a) and said fourth side (14d) and **in that** said sheet (12) is tensioned between the external rounded protrusion (17) of two opposite profiles (14) so that said sheet (12) is parallel to the second side (14b) of each profile (14).

2. The textile panel as in claim 1, **characterized in that** said hollow seating (20) has a circular section and is open towards said external rounded protrusion (17).

3. The textile panel as in claim 1, **characterized in that** said housing seating consists of at least one groove (18, 19) made longitudinally on said third side (14c) or said fourth side (14d) of said profiles (14), **and in that** said clamping means comprises at least a platelet (25), inserted slidable inside said groove (18, 19), and a pair of screw elements (27) able to screw into threaded holes (26) in said platelet (25) to determine the clamping through interference of a relative profile (14) between said platelet (25) and said connection means (15).

4. The textile panel as in claim 3, **characterized in that** said connection means comprises at least a bracket (15) defining two segments (22a, 22b) provided with respective through holes (24) for said screw elements (27), and **in that** each of said segments (22a, 22b) is able to cooperate with one of said profiles (14) in correspondence with at least said third side (14c) or said fourth side (14d) on which said groove (18, 19) is made.

5. The textile panel as in claim 4, **characterized in that** each of said profiles (14) has a square section and also comprises another groove (19) in addition to said at least one grove (18), **in that** relative platelets (25) are disposed in said two grooves (18, 19) made on said third and fourth sides (14c, 14d), and **in that** said two segments (22a, 22b) have an angular section so as to cooperate with both said adjacent third and fourth sides (14c, 14d).

6. Textile panel as in claim 1, **characterized in that** said connection means comprises a bracket (115) consisting of at least two attachment elements (122a, 122b) able to be joined together by means of an intermediate association element (123), and **in that** each of said attachment elements (122a, 122b) is able to be inserted and clamped inside one of said profiles (14).

7. The textile panel as in any claim hereinbefore, **characterized in that** said sheet (12) is attached by means of sewing to said flat portion (13a) of said bands (13).

8. The textile panel as in any claim hereinbefore, **characterized in that** it further comprises, for each of said profiles (14), a mating covering element (30), able to be associated therewith parallel to said first side (14a) to cover and protect at least said tensioning means (13).

9. The textile panel as in claim 8, **characterized in that** said covering element (30) has at least a coupling element (29) able to be constrained to a mating coupling element (21) made on said edge (16) of the relative profile (14) so as to be able to be associated under pressure with the relative profile (14).

10. The textile panel as in any claim hereinbefore, **characterized in that** it further comprises one or more complementary profiles (36), associated with said frame (11) and protruding with respect to said frame (11), for conferring a desired conformation on said sheet (12).

11. The textile panel as in claim 10, **characterized in that** said complementary profiles (36) have an arched shape.

12. A method to produce a textile panel to line or cover buildings, or to form dividing element and/or advertising means comprising at least a sheet (12) made of fabric or plastic material associated with a frame (11) by means of tensioning means (13), wherein said frame (11) has a polygonal conformation and is defined by a number of profiles (14) equivalent to the number of sides of said frame (11), wherein each of said profiles (14) has longitudinally at least a hollow seating (20), and wherein said profiles (14) are able to be connected to each other by means of connection means (15, 115) able to selectively allow both the reciprocal distancing thereof, to put said sheet (12) under tension, and the clamping thereof in a distanced position to maintain the tensioning of said sheet (12), wherein said method comprises at least the following step:
- making each one of said profiles (14) with, in sequence, a first side (14a) defining the external perimeter of said frame (11), a second side (14b), a third side (14c) and a fourth side (14d), and having over its entire length an edge (16) between said first side (14a) and said fourth side (14d), **characterized in that** said method further comprises at least the following steps:
- providing said hollow seating on said edge (16), an external rounded protrusion (17) between said first side (14a) and said second side (14b), and at least a housing seating (18, 19) along said third side (14c) or said fourth side (14d) for housing clamping means (25, 27) able, in cooperation with said connection means (15, 115), to clamp said profiles (14) in said distanced position;
- making said tensioning means by a plurality of bands (13) each made of an elastomer, in such a manner that each of said bands (13) has a length mating with the relative profile (14), each of said bands (13) comprising, for the whole of its length, at least a substantially flat portion (13a), in correspondence with which the edge of said sheet (12) is able to be attached, and a terminal enlargement (13b) by means of which said band (13) is able to be inserted in said hollow seating (20) of the relative profile (14) to remain in said hollow seating (20) retained by interference and to be constrained to the relative profile (14);
- attaching said flat portion (13a) of said bands (13) along at least a part of the perimeter of said sheet (12);
- constraining said terminal enlargement (13b) of said bands (13) in said hollow seating (20) of said profiles (14) with said flat portion (13a) parallel to said first side (14a);
- positioning said sheet (12) between the external rounded protrusions (17) of two opposite profiles (14) so that said sheet (12) is substantially parallel to the second side (14b) of each profile (14) and has its perimetric edges folded around the respective external rounded protrusions (17) and parallel to the corresponding first side (14a) of each profile (14),
- connecting said profiles (14) to each other by means of said connection means (15, 115;
- thrusting said profiles (14) outwards in order to determine the reciprocal distancing thereof and the consequent tensioning of said sheet (12); and
- clamping said profiles (14) in the reciprocally distanced position to maintain said sheet (12) under tension between said external rounded protrusions (17) of said profiles (14).

13. The method as in claim 12, **characterized in that** said flat portion (13a) of said bands (13) is attached by sewing to said sheet (12).

14. The method as in claim 12, **characterized in that** the outward thrust of said profiles (14) is imparted by a device (31), provided with at least a fluid-dynamic actuator (32), able to simultaneously exert said thrust in a plurality of directions.

15. The method as in claim 14, wherein said frame (11) has a polygonal conformation and said connection means (15, 115) has at least two parts (22a-22b, 122a-122b) able to cooperate with two of said profiles (14) adjacent to each other, **characterized in that** said thrust is exerted by said device on said connection means (15, 115) which transmit said thrust to said profiles (14).

16. The method as in any claim from 12 to 15, **characterized in that** said profiles (14) are clamped in said reciprocally distanced position by means of screw means (27) disposed through between said profiles (14) and said connection means (15, 115).

17. The method as in claim 16, **characterized in that** said screw means comprises screws (27) which are screwed into corresponding threaded holes (26) made on at least a platelet (25) constrained to said profiles (14).

18. The method as in claim 17, **characterized in that** said screws (27) are first screwed only partly in order to allow the reciprocal distancing of said profiles (14), keeping said profiles (14) connected to each other, when said profiles (14) are thrust outwards, and then completely tightened in order to determine the clamping of said profiles (14) in said reciprocally distanced position.

19. The method as in any claim from 12 to 18, **characterized in that** it further comprises another step wherein a relative covering element (30) is associated with each edge (16) of said profiles (14), to cover and protect said tensioning means (13).

## Patentansprüche

1. Textilbahn zum Auskleiden oder Abdecken von Gebäudeelementen, oder zum Bilden eines Trennelements und/oder Werbemittels, mit wenigstens einer Lage (12) aus Stoff oder Kunststoffmaterial, die mittels einer Spanneinrichtung (13) an einem Rahmen (11) befestigt ist, wobei der Rahmen (11) eine polygonale Form aufweist und durch eine Anzahl von Profilen (14) entsprechend der Anzahl von Seiten des Rahmens (11) eingegrenzt ist, wobei jedes der Profile (14) longitudinal wenigstens eine hohle Aufnahme (20) hat, wobei die Profile (14) miteinander mittels einer Verbindungseinrichtung (15, 115) verbunden sind, die dazu in der Lage ist, sowohl einen wechselseitigen Abstand, um die Lage (12) unter Spannung zu setzen, als auch deren Festklemmen in einer Abstandsposition herzustellen, um die Spannung der Lage (12) beizubehalten, und wobei jedes der Profile (14) nacheinander eine erste Seite (14a), die den Außenumfang des Rahmens (11) eingrenzt, eine zweite Seite (14b), eine dritte Seite (14c) und eine vierte Seite (14d) aufweist und über seine gesamte Länge eine Kante (16) zwischen der ersten Seite (14a) und der vierten Seite (14d) aufweist, wobei ein außen abgerundeter Vorsprung (17) zwischen der ersten Seite (14a) und der zweiten Seite (14b) vorgesehen ist, und wenigstens eine Gehäuseaufnahme (18, 19) längs der dritten Seite (14c) oder der vierten Seite (14d) zur Unterbringung einer Klemmeinrichtung (25, 27) vorgesehen ist, die dazu ausgelegt ist, in Zusammenwirkung mit der Verbindungseinrichtung (15, 115) die Profile (14) in der Abstandsposition zu klemmen, wobei die Lage (12) zwischen dem außen abgerundeten Vorsprung (17) zweier entgegengesetzter Profile (14) gespannt ist und seine Umfangskanten um die jeweiligen außen abgerundeten Vorsprünge (17) und parallel zu der entsprechenden ersten Seite (14a) jedes Profils (14) gefaltet sind, wobei die Spanneinrichtung (13) parallel zu der ersten Seite (14a) angeordnet ist und mehrere Bänder (13) aufweist, die jeweils aus einem Elastomer hergestellt sind, und wobei jedes der Bänder (13) eine Länge aufweist, die mit der Länge des zugehörigen Profils (14) zusammenpasst und über seine gesamte Länge wenigstens einen flachen Abschnitt (13a), in Entsprechung mit dem die Kante der Lage (12) angebracht ist, und eine Anschlussvergrößerung (13b) aufweist, mittels der das Band (13) in die hohle Aufnahme (20) des zugehörigen Profils (14) einschiebbar ist, um in der hohlen Aufnahme (20) durch Eingriff zurückgehalten zu bleiben und an dem zugehörigen Profil (14) angebracht zu bleiben,
**dadurch gekennzeichnet, dass** die hohle Aufnahme (20) an der Kante (16) zwischen der ersten Seite (14a) und der vierten Seite (14d) vorgesehen ist, und dass die Lage (12) zwischen dem außen abgerundeten Vorsprung (17) und zwei entgegengesetzten Profilen (14) so gespannt ist, dass die Lage parallel zu der zweiten Seite (14b) jedes Profils (14) verläuft.

2. Textilbahn nach Anspruch 1, **dadurch gekennzeichnet, dass** die hohle Aufnahme (20) einen runden Querschnitt aufweist und in Richtung des außen abgerundeten Vorsprungs (17) offen ist.

3. Textilbahn nach Anspruch 1, **dadurch gekennzeichnet, dass** die Gehäuseaufnahme aus wenigstens einer Nut (18, 19) besteht, die longitudinal auf der dritten Seite (14c) oder der vierten Seite (14d) der Profile (14) hergestellt ist, und dass die Klemmeinrichtung wenigstens ein Plättchen (25), das verschiebbar innerhalb der Nut (18, 19) eingeschoben ist, und zwei Schraubelemente (27) aufweist, die dazu in der Lage sind, in Gewindelöcher (26) in dem Plättchen (25) geschraubt zu werden, um die Klemmung durch Eingriff eines zugehörigen Profils (14) zwischen dem Plättchen (25) und der Verbindungseinrichtung (15) festzulegen.

4. Textilbahn nach Anspruch 3, **dadurch gekennzeichnet, dass** die Verbindungseinrichtung wenigstens einen Winkel (15) aufweist, der zwei Schenkel (22a, 22b) mit entsprechenden Durchgangslöchern (24) für die Schraubelemente (27) umfasst und dass jeder der zwei Schenkel (22a, 22b) dazu ausgelegt ist, mit einem der Profile (14) korrespondierend mit wenigstens der dritten Seite (14c) oder der vierten Seite (14d) zusammenzuwirken, auf der die Nut (18, 19) hergestellt ist.

5. Textilbahn nach Anspruch 4, **dadurch gekennzeichnet, dass** jedes der Profile (14) einen quadratischen Querschnitt hat und auch eine weitere Nut (19) zusätzlich zu der wenigstens einen Nut (18) aufweist, dass zugehörige Plättchen (25) in den zwei Nuten (18, 19) auf der dritten und der vierten Seite (14c, 14d) angeordnet sind, und dass die zwei Schenkel (22a, 22b) einen abgewinkelten Querschnitt aufweisen, um mit den beiden angrenzenden dritten und vierten Seiten (14c, 14d) zusammenzuwirken.

6. Textilbahn nach Anspruch 1, **dadurch gekennzeichnet, dass** die Verbindungseinrichtung einen Winkel (115) aufweist, der aus wenigstens zwei Anbringungselementen (122a, 122b) besteht, die dazu ausgelegt sind, mittels eines Zwischenverbindungselements (123) miteinander verbunden zu werden, und dass jedes der Anbringungselemente (122a, 122b) dazu ausgelegt ist, in eines der Profile (14) eingeschoben und darin geklemmt zu werden.

7. Textilbahn nach einem der vorstehenden Ansprüche, **dadurch gekennzeichnet, dass** die Lage (12) mittels Nähen an dem flachen Abschnitt (13a) des Bandes (13) angebracht ist.

8. Textilbahn nach einem der vorstehenden Ansprüche, **dadurch gekennzeichnet, dass** sie ferner für jedes der Profile (14) ein passendes Abdeckungselement (30) aufweist, das dazu in der Lage ist, damit parallel zu der ersten Seite (14a) verbunden zu werden, um wenigstens die Spanneinrichtung (13) abzudecken und zu schützen.

9. Textilbahn nach Anspruch 8, **dadurch gekennzeichnet, dass** das Abdeckungselement (30) wenigstens ein Kopplungselement (29) aufweist, das dazu in der Lage ist, an einem passenden Kopplungselement (21) angebracht zu werden, das an der Kante (16) des zugehörigen Profils (14) hergestellt ist, um dazu geeignet zu sein, unter Druck mit dem zugehörigen Profil (14) verbunden zu werden.

10. Textilbahn nach einem der vorstehenden Ansprüche, **dadurch gekennzeichnet, dass** sie ferner ein oder mehrere komplementäre Profile (36) aufweist, die dem Rahmen (11) zugeordnet sind und aus dem Rahmen (11) hervorstehen, um der Lage (12) eine gewünschte Gestalt zu verleihen.

11. Textilbahn nach Anspruch 10, **dadurch gekennzeichnet, dass** die komplementären Profile (36) eine gebogene Form haben.

12. Verfahren zum Herstellen einer Textilbahn zum Auskleiden oder Abdecken von Gebäudeelementen oder zum Bilden eines Trennelements und/oder Werbemittels mit wenigstens einer Lage (12) aus Stoff oder Kunststoffmaterial, das mittels einer Spanneinrichtung (13) an einem Rahmen (11) befestigt ist, wobei der Rahmen (11) eine polygonale Form hat und durch eine Anzahl von Profilen (14) entsprechend der Anzahl von Seiten des Rahmens (11) eingegrenzt ist, wobei jedes der Profile (14) longitudinal wenigstens eine hohle Aufnahme (20) aufweist, und wobei die Profile (14) dazu in der Lage sind, mittels einer Verbindungseinrichtung (15, 115) miteinander verbunden zu werden, die dazu in der Lage ist, sowohl deren wechselseitigen Abstand, um die Lage (12) unter Spannung zu setzen, als auch deren Klemmung in einer Abstandsposition herzustellen, um die Spannung der Lage (12) beizubehalten, wobei in dem Verfahren als ein Schritt:
- jedes der Profile (14) mit, aufeinanderfolgend, einer ersten Seite (14a), die einen Außenumfang des Rahmens (11) eingrenzt, einer zweiten Seite (14b), einer dritten Seite (14c) und einer vierten Seite (14d) hergestellt wird und über seine Gesamtlänge eine Kante (16) zwischen der ersten Seite (14a) und der vierten Seite (14d) aufweist,
**dadurch gekennzeichnet, dass** als Schritte in dem Verfahren ferner:
- die hohle Aufnahme an der Kante (16), ein außen abgerundeter Vorsprung (17) zwischen der ersten Seite (14a) und der zweiten Seite (14b) und wenigstens eine Gehäuseaufnahme (18, 19) längs der dritten Seite (14c) oder der vierten Seite (14d) zur Unterbringung einer Klemmeinrichtung (25, 27) vorgesehen werden, die dazu in der Lage ist, in Zusammenwirkung mit der Verbindungseinrichtung (15, 115) die Profile (14) in der Abstandsposition zu klemmen,
- die Spanneinrichtung durch mehrere Bänder (13) hergestellt wird, die jeweils aus einem Elastomer sind, so dass jedes der Bänder (13) eine zu dem zugehörigen Profil (14) passende Länge hat, jedes der Bänder (13) über seine gesamte Länge wenigstens einen im Wesentlichen flachen Abschnitt (13a), in Entsprechung zu dem die Kante der Lage (12) anbringbar ist, und eine Anschlussvergrößerung (13b) aufweist, mittels der das Band (13) in die hohle Aufnahme (20) des zugehörigen Profils (14) einschiebbar ist, um in der hohlen Aufnahme (20) durch Eingriff zurückgehalten und an dem zugehörigen Profil (14) angebracht zu bleiben,
- der flache Abschnitt (13a) der Bänder (13) wenigstens teilweise entlang des Umfangs der Lage (12) angebracht wird,
- die Anschlussvergrößerung (13b) der Bänder (13) in der hohlen Aufnahme (20) der Profile (14) mit dem flachen Abschnitt (13a) parallel zu der ersten Seite (14a) angebracht wird,
- die Lage (12) zwischen den außen abgerundeten Vorsprüngen (17) der zwei entgegensetzten Profile (14) so positioniert wird, dass die Lage (12) im Wesentlichen parallel zu der zweiten Seite (14b) jedes Profils (14) ist und seine Außenkanten um die zugehörigen außen abgerundeten Vorsprünge (17) und parallel zu der entsprechenden ersten Seite (14a) jedes Profils (14) gefaltet sind,
- die Profile (14) miteinander durch die Verbindungseinrichtung (15, 115) verbunden werden,
- die Profile (14) nach außen gedrückt werden, um ihren wechselseitigen Abstand und die daraus folgende Spannung der Lage (12) festzulegen, und
- die Profile (14) in der wechselseitigen Abstandsposition geklemmt werden, um die Lage (12) unter Spannung zwischen den außen abgerundeten Vorsprüngen (17) der Profile (14) zu halten.

13. Verfahren nach Anspruch 12, **dadurch gekennzeichnet, dass** der flache Abschnitt (13a) der Bänder (13) durch Nähen an der Lage (12) angebracht wird.

14. Verfahren nach Anspruch 12, **dadurch gekennzeichnet, dass** der Außenschub der Profile (14) durch eine Vorrichtung (31) geteilt wird, die mit wenigstens einem fluiddynamischen Antrieb (32) versehen ist, der dazu in der Lage ist, Schub in mehrere Richtungen gleichzeitig auszuüben.

15. Verfahren nach Anspruch 14, wobei der Rahmen (11) eine polygonale Form hat und die Verbindungseinrichtung (15, 115) wenigstens zwei Teile (22a-22b, 122a-122b) aufweist, die dazu in der Lage sind, mit zwei zueinander benachbarten der Profile (14) zusammenzuarbeiten, **dadurch gekennzeichnet, dass** der Schub durch die Vorrichtung auf die Verbindungseinrichtung (15, 115) ausgeübt wird, die den Schub auf die Profile (14) überträgt.

16. Verfahren nach einem der Ansprüche 12 bis 15, **dadurch gekennzeichnet, dass** die Profile (14) in der wechselseitigen Abstandsposition mittels einer Schraubeinrichtung (27) geklemmt werden, die zwischen den Profilen (14) und der Verbindungseinrichtung (15, 115) hindurch angeordnet ist.

17. Verfahren nach Anspruch 16, **dadurch gekennzeichnet, dass** die Schraubeinrichtung Schrauben (27) umfasst, die in entsprechende Gewindelöcher (26) geschraubt werden, die an wenigstens einem Plättchen (25) gemacht sind, das an den Profilen (14) angebracht ist.

18. Verfahren nach Anspruch 17, **dadurch gekennzeichnet, dass** die Schrauben (27) zuerst nur teilweise eingeschraubt werden, um die Herstellung eines wechselseitigen Abstands der Profile (14) zu erlauben, die Profile (14) miteinander verbunden gehalten werden, wenn die Profile (14) nach außen geschoben werden, und dann vollständig festgezogen werden, um die Klemmung der Profile (14) in der wechselseitigen Abstandsposition festzulegen.

19. Verfahren nach einem der Ansprüche 12 bis 18, **dadurch gekennzeichnet, dass** in einem Schritt ferner ein zugehöriges Abdeckelement (30) mit jeder Kante (16) der Profile (14) verbunden wird, um die Spanneinrichtung (13) abzudecken und zu schützen.

## Revendications

1. Panneau en textile destiné à revêtir ou recouvrir des bâtiments, ou à former un élément de séparation et/ou un support publicitaire, comprenant au moins une feuille (12) constituée d'un matériau d'étoffe ou de plastique associée à un cadre (11) au moyen d'un moyen de tension (13), dans lequel ledit cadre (11) a une conformation polygonale et est défini par un certain nombre de profilés (14) équivalent au nombre de côtés dudit cadre (11), dans lequel chacun desdits profilés (14) comprend longitudinalement au moins une assise creuse (20), dans lequel lesdits profilés (14) sont raccordés les uns aux autres au moyen d'un moyen de raccordement (15, 115) pouvant permettre sélectivement à la fois leur éloignement réciproque, pour mettre ladite feuille (12) sous tension, et leur serrage à une position éloignée pour maintenir la tension de ladite feuille (12), et dans lequel chacun desdits profilés (14) a, dans l'ordre, un premier côté (14a) définissant le périmètre externe dudit cadre (11), un deuxième côté (14b), un troisième côté (14c) et un quatrième côté (14d), et a sur la totalité de sa longueur un bord (16) entre ledit premier côté (14a) et ledit quatrième côté (14d), dans lequel une protubérance arrondie externe (17) est prévue entre ledit premier côté (14a) et ledit deuxième côté (14b), et au moins une assise de logement (18, 19) est prévue le long dudit troisième côté (14c) ou dudit quatrième côté (14d) pour loger un moyen de serrage (25, 27) pouvant, en coopération avec ledit moyen de raccordement (15, 115), serrer lesdits profilés (14) dans ladite position éloignée, dans lequel ladite feuille (12) est sous tension entre la protubérance arrondie externe (17) de deux profilés opposés (14) et a ses bords périmétriques pliés autour de la protubérance arrondie externe (17) respective et parallèles au premier côté (14a) correspondant de chaque profilé (14), dans lequel ledit moyen de tension (13) est disposé parallèlement audit premier côté (14a) et comprend une pluralité de bandes (13), chacune constituée d'un élastomère et dans lequel chacune desdites bandes (13) a une longueur s'accouplant avec la longueur du profilé (14) lié et comprend, pour la totalité de sa longueur, au moins une portion plate (13a), en correspondance avec laquelle le bord de ladite feuille (12) est attaché, et un agrandissement terminal (13b) au moyen duquel ladite bande (13) peut être insérée dans ladite assise creuse (20) du profilé (14) lié pour rester dans ladite assise creuse (20) retenue par interférence et pour être contraint vers le profilé (14) lié, **caractérisé en ce que** ladite assise creuse (20) est prévue sur ledit bord (16) entre ledit premier côté (14a) et ledit quatrième côté (14d) et **en ce que** ladite feuille (12) est sous tension entre la protubérance arrondie externe (17) de deux profilés opposés (14) de sorte que ladite feuille (12) est parallèle au deuxième côté (14b) de chaque profilé (14).

2. Panneau en textile selon la revendication 1, **caractérisé en ce que** ladite assise creuse (20) a une section circulaire et est ouverte vers ladite protubérance arrondie externe (17).

3. Panneau en textile selon la revendication 1, **caractérisé en ce que** ladite assise de logement consiste en au moins une rainure (18, 19) réalisée longitudinalement sur ledit troisième côté (14c) ou ledit quatrième côté (14d) desdits profilés (14), et **en ce que** ledit moyen de serrage comprend au moins une lamelle (25), insérée avec faculté de coulissement à l'intérieur de ladite rainure (18, 19), et une paire d'éléments de vis (27) pouvant être vissés dans des trous filetés (26) dans ladite lamelle (25) afin de déterminer le serrage par interférence d'un profilé (14) lié entre ladite lamelle (25) et ledit moyen de raccordement (15).

4. Panneau en textile selon la revendication 3, **caractérisé en ce que** ledit moyen de connexion comprend au moins une console (15) définissant deux segments (22a, 22b) dotés de trous traversants (24) respectifs pour lesdits éléments de vis (27), et **en ce que** chacun desdits éléments de vis (22a, 22b) peut coopérer avec l'un desdits profilés (14) en correspondance avec au moins ledit troisième côté (14c) ou ledit quatrième côté (14d) sur lequel ladite rainure (18, 19) est réalisée.

5. Panneau en textile selon la revendication 4, **caractérisé en ce que** chacun desdits profilés (14) a une section carrée et comprend également une autre rainure (19) en plus de ladite au moins une rainure (18), **en ce que** des lamelles (25) liées sont disposées dans lesdites deux rainures (18, 19) réalisées sur lesdits troisième et quatrième côtés (14c, 14d), et **en ce que** lesdits deux segments (22a, 22b) ont une section angulaire de façon à coopérer avec les deux dits troisième et quatrième côtés (14c, 14d) adjacents.

6. Panneau en textile selon la revendication 1, **caractérisé en ce que** ledit moyen de raccordement comprend une console (115) consistant en au moins deux éléments de fixation (122a, 122b) pouvant être reliés ensemble au moyen d'un élément d'association intermédiaire (123), et **en ce que** chacun desdits éléments de fixation (122a, 122b) peut être inséré et serré à l'intérieur de l'un desdits profilés (14).

7. Panneau en textile selon l'une quelconque des revendications précédentes, **caractérisé en ce que** ladite feuille (12) est fixée par couture à ladite portion plate (13a) desdites bandes (13).

8. Panneau en textile selon l'une quelconque des revendications précédentes, **caractérisé en ce qu'**il comprend en outre, pour chacun desdits profilés (14), un élément de recouvrement d'accouplement (30) pouvant être associé à ceux-ci parallèlement audit premier côté (14a) afin de recouvrir et protéger au moins ledit moyen de tension (13).

9. Panneau en textile selon la revendication 8, **caractérisé en ce que** ledit élément de recouvrement (30) comprend au moins un élément de couplage (29) pouvant être contraint à un élément d'accouplement de couplage (21) réalisé sur ledit bord (16) du profilé (14) lié de façon à pouvoir être associé sous pression au profilé (14) lié.

10. Panneau en textile selon l'une quelconque des revendications précédentes, **caractérisé en ce qu'**il comprend en outre un ou plusieurs profilés complémentaires (36), associés audit cadre (11) et faisant saillie par rapport audit cadre (11), pour conférer une conformation souhaitée sur ladite feuille (12).

11. Panneau en textile selon la revendication 10, **caractérisé en ce que** lesdits profilés complémentaires (36) ont une forme arquée.

12. Procédé de production d'un panneau en textile destiné à revêtir ou recouvrir des bâtiments, ou à former un élément de séparation et/ou un support publicitaire comprenant au moins une feuille (12) constituée d'un matériau d'étoffe ou de plastique associé à un cadre (11) au moyen d'un moyen de tension (13), dans lequel ledit cadre (11) a une conformation polygonale et est défini par un certain nombre de profilés (14) équivalents au nombre de côtés dudit cadre (11), dans lequel chacun desdits profilés (14) comprend longitudinalement au moins une assise creuse (20), et dans lequel lesdits profilés (14) peuvent être raccordés les uns aux autres au moyen d'un moyen de raccordement (15, 115) pouvant permettre sélectivement à la fois leur éloignement réciproque, pour mettre ladite feuille (12) sous tension, et leur serrage dans une position éloignée pour maintenir la tension de ladite feuille (12), dans lequel ledit procédé comprend au moins l'étape suivants :
- réalisation de chacun desdits profilés (14) avec, dans l'ordre, un premier côté (14a) définissant le périmètre externe dudit cadre (11), un deuxième côté (14b), un troisième côté (14c) et un quatrième côté (14d), et comprenant sur la totalité de sa longueur un bord (16) entre ledit premier côté (14a) et ledit quatrième côté (14d), **caractérisé en ce que** ledit procédé comprend au moins les étapes suivantes :
- fourniture de ladite assise creuse sur ledit bord (16), d'une protubérance arrondie externe (17) entre ledit premier côté (14a) et ledit deuxième côté (14b), et d'au moins une assise de logement (18, 19) le long dudit troisième côté (14c) ou dudit quatrième côté (14d) pour loger un moyen de serrage (25, 27) pouvant, en coopération avec ledit moyen de raccordement (15, 115), serrer lesdits profilés (14) dans ladite position éloignée ;
- réalisation dudit moyen de tension par une pluralité de bandes (13) chacune constituée d'un élastomère, d'une manière telle que chacune desdites bandes (13) est une longueur s'accouplant avec le profilé (14) lié, chacune desdites bandes (13) comprenant, pour la totalité de sa longueur, au moins une portion sensiblement plate (13a), en correspondance avec laquelle le bord de ladite feuille (12) peut être fixé, et un agrandissement terminal (13b) au moyen duquel ladite bande (13) peut être insérée dans ladite assise creuse (20) du profilé (14) lié pour rester dans ladite assise creuse (20) retenue par interférence et pour être contraint vers le profilé (14) lié ;
- fixation de ladite portion plate (13a) desdites bandes (13) le long d'au moins une partie du périmètre de ladite feuille (12) ;
- contrainte dudit agrandissement terminal (13b) desdites bandes (13) dans ladite assise creuse (20) desdits profilés (14) avec ladite portion plate (13a) parallèle audit premier côté (14a) ;
- positionnement de ladite feuille (12) entre les protubérances arrondies externes (17) de deux profilés opposés (14) de sorte que ladite feuille (12) est sensiblement parallèle au deuxième côté (14b) de chaque profilé (14) et a ses bords périmétriques repliés autour des protubérances arrondies externes (17) respectives et parallèlement au premier côté (14a) correspondant de chaque profilé (14),
- raccordement desdits profilés (14) les uns aux autres au moyen dudit moyen de raccordement (15, 115) ;
- poussée desdits profilés (14) vers l'extérieur afin de déterminer leur éloignement réciproque et la tension résultante de ladite feuille (12) ; et
- le serrage desdits profilés (14) dans la position réciproquement éloignée pour maintenir ladite feuille (12) sous tension entre lesdites protubérances arrondies externes (17) desdits profilés (14).

13. Procédé selon la revendication 12, **caractérisé en ce que** ladite portion plate (13a) desdites bandes (13) est fixée par couture à ladite feuille (12).

14. Procédé selon la revendication 12, **caractérisé en ce que** la poussée vers l'extérieur desdits profilés (14) est communiquée par un dispositif (31), doté d'au moins un actionneur hydrodynamique (32), pouvant exercer simultanément ladite poussée dans une pluralité de directions.

15. Procédé selon la revendication 14, dans lequel ledit cadre (11) a une conformation polygonale et ledit moyen de raccordement (15, 115) comprend au moins deux parties (22a-22b, 122a-122b) pouvant coopérer avec deux desdits profilés (14) adjacents l'un à l'autre, **caractérisé en ce que** ladite poussée est exercée par ledit dispositif sur ledit moyen de raccordement (15, 115) qui transmet ladite poussée auxdits profilés (14).

16. Procédé selon l'une quelconque des revendications 12 à 15, **caractérisé en ce que** lesdits profilés (14) sont serrés dans ladite position réciproquement éloignée au moyen d'un moyen de vis (27) disposé de façon traversante entre lesdits profilés (14) et ledit moyen de raccordement (15, 115).

17. Procédé selon la revendication 16, **caractérisé en ce que** ledit moyen de vis comprend des vis (27) qui sont vissées dans des trous filetés (26) correspondants réalisés sur au moins une lamelle (25) contrainte auxdits profilés (14).

18. Procédé selon la revendication 17, **caractérisé en ce que** lesdites vis (27) sont d'abord vissées uniquement partiellement afin de permettre l'éloignement réciproque desdits profilés (14), maintenant lesdits profilés (14) raccordés les uns aux autres, lorsque lesdits profilés (14) sont poussés vers l'extérieur, puis complètement serrés fermement afin de déterminer le serrage desdits profilés (14) dans ladite position réciproquement éloignée.

19. Procédé selon l'une quelconque des revendications 12 à 18, **caractérisé en ce qu'**il comprend en outre une autre étape, dans laquelle un élément de recouvrement (30) lié est associé à chaque bord (16) desdits profilés (14), afin de recouvrir et protéger ledit moyen de tension (13).
